# EUROPÄISCHE PATENTANMELDUNG

(11) **EP 2 360 121 A2**
(43) Veröffentlichungstag der Anmeldung: **24.08.2011**
(21) Anmeldenummer: 11000508.9
(22) Anmeldetag: 22.01.2011
(51) Int. Cl.: C01F 5/24, C01F 11/18, C01B 31/24, C01D 7/12, C01G 9/00, C01G 45/00, C01G 49/00, C01B 13/32, C01D 7/10

(54) **Verfahren zur Herstellung von Aerosolpartikeln mittels Versprühen einer wässrigen Ausgangslösung sowie nach diesem Verfahren erhältliche Aerosolpartikel und deren Verwendung**

(30) Priorität: 24.02.2010 DE 102010009187
(71) Anmelder: Forschungszentrum Jülich Gmbh, 52425 Jülich (DE)
(72) Erfinder: Müller, Klaus-Peter, 52428 Jülich (DE); Defeng, Zhao, Bejing 100871 (CN); Mentel, Thomas, 35390 Giessen (DE)

(57) **Zusammenfassung**

Die Erfindung betrifft ein Verfahren zur Herstellung von Aerosolpartikeln, umfassend folgende Schritte:
- Herstellung einer Ausgangslösung durch
a) Begasen einer wässrigen Lösung, enthaltend ein Carbonatsalz, das mindestens bis zu seinem Löslichkeitsprodukt in Wasser gelöst vorliegt, mit CO₂;
b) Abtrennen der entstandenen bicarbonathaltigen Lösung (= Ausgangslösung) vom festen Carbonatsalz;
- Versprühen dieser Ausgangslösung;
- Trocknen des dadurch erhaltenen Gemisches aus Aerosolpartikeln, Gas und Wasser;
- Tempern der Aerosolpartikel bei Temperaturen ≥ 150°C zur Umwandlung der bicarbonathaltigen Aerosolpartikel in carbonathaltige Aerosol-partikel.

Die Erfindung betrifft weiterhin nach diesem Verfahren erhältliche Aerosolpartikel und deren Verwendung.

## Beschreibung

Die Erfindung betrifft ein Verfahren zur Herstellung von Aerosolpartikeln mittels Versprühen einer wässrigen Ausgangslösung. Die Erfindung betrifft weiterhin nach diesem Verfahren erhältliche Aerosolpartikel und deren Verwendung.

Im Rahmen der vorliegenden Erfindung wird unter der Bezeichnung Aerosol ein Gemisch aus festen und/oder flüssigen Schwebeteilchen und einem Gas verstanden. Die Schwebeteilchen werden als Aerosolpartikel bezeichnet. Der Durchmesser dieser Aerosolpartikel liegt im Bereich zwischen 0,5 nm und mehreren 10 µm.

Mineralische Aerosolpartikel gehören zu den meist verbreiteten Bestandteilen des Aerosols in der Atmosphäre. Sie stammen hauptsächlich aus windgetragenen Bodenbestandteilen der Wüsten oder semiarider Gebiete, aber auch aus Vulkanstaub, Straßenstaub und einigen industriellen und landwirtschaftlichen Prozessen. Abschätzungen ergeben, dass annähernd 1000-3000 Tg mineralische Aerosolpartikel jährlich in die Atmosphäre gelangen (Jonas et al., 1995). Obwohl mineralische Aerosolpartikel typischerweise im grobdispersen Bereich angesiedelt werden, wird eine signifikante Anzahl mineralischer Partikel auch im feindispersen Verteilungsbereich gefunden. (Usher, 2003; Song et al., 2005). Auf regionaler Skala haben mineralische Aerosolpartikel einen Einfluss auf die Sichtweite, die Luftqualität und die menschliche Gesundheit. Auf der globalen Skala können mineralische Aerosolpartikel nicht nur den Strahlungstransfer durch Absorption und Streuung von Sonnenstrahlung beeinflussen, sondern auch die Wolkenbildung und deren optische Eigenschaften beeinträchtigen. Auf diese Weise beeinflussen mineralische Aerosolpartikel letztlich das globale Klima durch direkte und indirekte Störung des Strahlungshaushaltes. Während des Langstreckentransports von mineralischen Aerosolen können diese verschiedenste heterogene Reaktionen durchleben und ihre Deposition hat einen Einfluss auf das ozeanische Ökosystem und den gesamten biogeochemischen Zyklus. CaCO₃ ist ein üblicher Bestandteil der mineralischen Aerosolpartikel, speziell in Ostasien und gilt im Allgemeinen als die reaktivste Komponente mineralischer Partikel (Krueger et al., 2003; Laskin et al., 2005; Sullivan et al., 2007; Usher, 2003). CaCO₃ ist in erheblichen Mengen sowohl in mineralischen Aerosolen (Okada et al., 2005; Zhang, 2003) als auch in demjenigen Teil der Erdoberfläche vorhanden (mindestens 5-10 % Massenanteil), der die hauptsächliche weltweite Staubquelle darstellt (Claquin et al., 1999). Es wurde festgestellt, dass CaCO₃ eine der wenigen "flüchtigen" Verbindungen im mineralischen Aerosol ist, die heterogene Reaktionen mit atmosphärischen Säuren im Spurenbereich eingehen und CO₂ bilden kann (Krueger et al., 2003; Laskin et al., 2005). Viele Experimentatoren haben die heterogenen Reaktionen von CaCO₃ als Surrogat für Mineralstaub untersucht sowie dessen Einfluss auf die physikochemischen Eigenschaften mineralischer Partikel (Krueger et al., 2003; Liu et al., 2008a; Liu et al., 2008b; Gibson et al., 2006a). Bei der Untersuchung dieser physikochemischen Eigenschaften des mineralischen Aerosols ist die Erzeugung von Ersatzstoffen für mineralisches Aerosol sehr hilfreich.

Zurzeit gibt es zwei gängige Methoden, CaCO₃-Aerosolpartikel herzustellen: die trockene Dispersion von Feststoffpulver (Sullivan et al., 2009a) und die Zerstäubung wässriger Suspensionen von CaCO₃-Pulver (Gibson et al., 2006a, b; Sullivan et al., 2009b). Beide sind nicht leicht zu handhaben und es ist nicht einfach, einen stabilen Ertrag an passender Größe und Konzentration der Partikel zu erzeugen.

Verglichen mit der trockenen Dispersion von Pulvern benötigt die Aerosolpartikelerzeugung durch Versprühen von Lösungen keine komplizierten Apparaturen und ist einfacher anzuwenden und zu regeln. Allerdings haben die meisten Bestandteile von Mineralstaub eine sehr geringe Löslichkeit, was das Versprühen von deren Lösungen schwierig macht. Vlasenko et al. haben die Zerstäubung gesättigter Lösungen von CaCO₃ benutzt, um CaCO₃-Aerosolpartikel zu erzeugen

(Vlasenko et al., 2006; Sullivan et al., 2009b). Allerdings ist aufgrund der geringen Löslichkeit von CaCO₃ in Wasser die Partikelkonzentration des erhaltenen Aerosols meist nicht hoch genug und die Größenverteilung zu allzu kleinen Durchmessern verschoben, wenn man beachtet, dass eine Beobachtung der physikochemischen Eigenschaften durch HTDMA (*Hygroscopicity Tandem Differential Mobility Analyzer)* und CCN-( *Cloud Condensation Nucleii Counter)* Aktivierung erforderlich ist.

Zum Zwecke der Untersuchung chemischer Reaktionen an CaCO₃-Aerosolpartikeln und um mikrophysikalische Eigenschaften der behandelten Aerosolpartikel zu bestimmen ist es von Vorteil, ein einfach zu handhabendes und reproduzierbares Verfahren zur Erzeugung von CaCO₃- Aerosolpartikeln und anderen Aerosolpartikeln zur Verfügung zu haben, das eine genügend hohe Partikelkonzentration bei geeigneter Größenverteilung liefert.

Es ist daher Aufgabe der Erfindung, ein wirtschaftliches, reproduzierbares und einfach zu handhabendes Verfahren zur Erzeugung von Aerosolpartikeln zu schaffen. Es ist weiterhin Aufgabe der Erfindung, nach diesem Verfahren erhältliche "Aerosolpartikel" bereitzustellen.

Ausgehend vom Oberbegriff des Anspruchs 1 wird die Aufgabe erfindungsgemäß gelöst mit den im kennzeichnenden Teil des Anspruchs 1 angegebenen Merkmalen. Weiterhin wird die Aufgabe ausgehend vom Oberbegriff der Ansprüche 9, 11 und 12 erfindungsgemäß gelöst mit den im kennzeichnenden Teil der Ansprüche 9, 11 und 12 angegebenen Merkmalen.

In überraschender Weise hat sich gezeigt, dass durch Versprühen von einer Ausgangslösung mit erhöhten Anteilen an gelöstem CaCO₃, anschließendem Trocknen und Tempern, CaCO₃-Aerosolpartikel erzeugt werden können.

Das erfindungsgemäße Verfahren gemäß Anspruch 1 umfasst folgende Schritte:
- Herstellung einer Ausgangslösung durch
   a) Begasen einer wässrigen Lösung, enthaltend ein Carbonatsalz, das mindestens bis zu seinem Löslichkeitsprodukt in Wasser gelöst vorliegt, mit CO₂
   b) Abtrennen der entstandenen bicarbonathaltigen Lösung (= Ausgangslösung) vom noch enthaltenen festen Carbonatsalz
      - Versprühen dieser Ausgangslösung
      - Trocknen des erhaltenen Gemisches aus Aerosolpartikeln, Gas und Wasser
      - Tempern der Aerosolpartikel bei Temperaturen ≥ 150°C zur Umwandlung der bicarbonathaltigen Aerosolpartikel in carbonathaltige Aerosol-partikel.

Vorteilhafte Weiterbildungen sind in den Unteransprüchen angegeben.

Im Folgenden werden das erfindungsgemäße Verfahren sowie die dadurch bereit gestellten Aerosolpartikel näher beschrieben.

Das erfindungsgemäße Verfahren macht Gebrauch vom Gleichgewicht zwischen CaCO₃ und der wasserlöslichen Form Ca(HCO₃)₂ in Gegenwart von CO₂ (R1). CaCO₃ ist in natürlichen Wässern allgegenwärtig, wenn gelöstes CO₂ mit CaCO₃-haltigem Gestein in Kontakt kommt. Dieser Prozess der Auflösung von CaCO₃ führt z. B. zu der Bildung von Stalaktiten, Stalagmiten, Säulen und anderen Speläothemen in Höhlen, wenn das CO₂ aus dem Wasser ausgast und CaCO₃-Sediment entsteht (Fairchild et al., 2006; Murray, 1954).

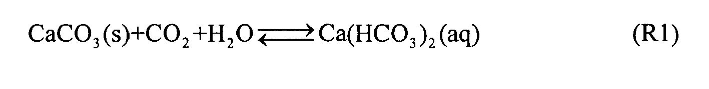

Wenn die CO₂-Konzentration in Reaktion (R1) hoch ist, wird das Gleichgewicht nach rechts verschoben und die Auflösung von festem CaCO₃ vorangetrieben. Wird hingegen das CO₂ im Gleichgewicht verringert, erzeugt die Reaktion festes CaCO₃.

Im vorliegenden Fall wurde reines CO₂ für einige Stunden (ca. 1 bis 3 Stunden) durch Wasser perlen lassen, das im Kontakt mit CaCO₃-Pulver stand, um die weitere Auflösung von CaCO₃ und die Bildung von Ca(HCO₃)₂ in Lösung voranzutreiben. Das CaCO₃-Pulver sollte im Überschuss im Wasser vorliegen, damit das CO₂ mit einer ausreichenden Menge an CaCO₃ reagieren kann. Das Carbonatsalz sollte mindestens bis zu seinem Löslichkeitsprodukt in Wasser gelöst vorliegen. Vorzugsweise sollte das CaCO₃-Pulver oder ein anderes Carbonatsalz in wenigstens der 2-fachen Menge der gewünschten oder zu erzielenden Partikelmenge eingesetzt werden. So sollten beispielsweise bei einer gewünschten Menge von 2g Partikeln wenigstens 4g CaCO₃-Pulver eingesetzt werden. Für das erfindungsgemäße Verfahren wesentlich ist es jedoch, dass das CO₂ mit CaCO₃ oder einem anderen Carbonatsalz reagieren kann, um Bicarbonat zu bilden.

Die überstehende klare Lösung enthält nunmehr Ca(HCO₃)₂ (aq) gemäß obiger Reaktionsgleichung (R1) oder ein anderes Bicarbonat, und wird vom überschüssigen festen Niederschlag, bestehend aus CaCO₃ oder einem anderen Carbonat, durch beispielsweise Dekantieren abgetrennt. Diese klare Lösung wird im Folgenden auch als Ausgangslösung bezeichnet.

Neben Calciumcarbonat sind für das erfindungsgemäße Verfahren auch Metallcarbonate oder Übergangsmetallcarbonate sowie auch z. B. MgCO₃, Na₂CO₃, K₂CO₃, FeCO₃, MnCO₃ oder ZnCO₃ geeignet. Diese reagieren analog zum CaCO₃ und bilden ebenfalls entsprechende Bicarbonate.

Neben den zuvor genannten Carbonatverbindungen ist das erfindungsgemäße Verfahren auch für Verbindungen enthaltend Metalle oder Übergangsmetalle geeignet, die in Wasser lösbar sind bzw. durch Ansäuern mit Mineralsäuren (z. B. Salzsäure, Schwefelsäure oder Salpetersäure) oder Carbonsäuren (wie z. B. Essigsäure, Ameisensäure) in Lösung gebracht werden können. Hierzu können die Metalle oder Übergangsmetalle z. B. mit Hilfe von den zuvor genannten Säuren vollständig oder nur zum Teil in Lösung gebracht werden.

Zur Herstellung der Aerosolpartikel wird diese klare Ausgangslösung versprüht. Dazu eignen sich allgemein Düsen, Zerstäuber oder spezielle Aerosolgeneratoren, die z. B. über Druckluft betrieben werden. Für die Einstellung der Partikelgröße sind vor allem die Druckluftdifferenz sowie der Durchmesser der Düsenöffnung von Bedeutung. Je nach gewünschter Aerosolpartikelgröße kann die Druckdifferenz und der Durchmesser der Düsenöffnung variiert werden. So kann beispielsweise für die Einstellung einer Aerosolpartikelgröße von 120 bis 130 nm die Druckluftdifferenz beispielsweise ca. 4 bar und der Durchmesser der Düsenöffnung beispielsweise ca. 100 µm betragen.

Durch das Versprühen bildet sich ein Gemisch aus Gas, Aerosolpartikeln aus Ca(HCO₃)₂ oder anderen Bicarbonaten, bzw. Metall-/Übergangsmetallsalzen, je nach vorher eingesetztem Carbonat, bzw. Metall/Übergangsmetall und Wasser.

Um das in diesem Gemisch enthaltene Wasser zu entfernen wird das Gemisch einem Trocknungsprozess ausgesetzt. Dies kann beispielsweise durch Durchleiten des Gemisches durch einen Trockenturm/Trockensäule erfolgen, in dem durch Durchleiten durch ein Trocknungsmittel (z. B. Silicagel oder andere nach dem Stand der Technik bekannte Trocknungsmittel) in dem Turm/in der Säule das Wasser durch Diffusion dem Gas/Aerosolpartikelgemisch entzogen wird. Weiterhin geeignet ist beispielsweise auch das Durchleiten des Gemisches durch semipermeable Wände oder Schläuche, die im Gegenstrom das Wasser entziehen. Allgemein sind jegliche dem Fachmann bekannten Methoden geeignet, die einem Gemisch aus Gas, Partikeln und Wasser durch Diffusion das Wasser entziehen können.

Die Zusammensetzung der frisch versprühten und getrockneten Aerosolpartikel kann mittels Aerosol-Massenspektrometrie (=AMS) als Ca(HCO₃)₂ bestimmt werden.

Um die Ca(HCO₃)₂-Aerosolpartikel, bzw. Bicarbonat-Aerosolpartikel, in CaCO₃-Aerosolpartikel, bzw. Carbonat-Aerosolpartikel, umzuwandeln und letzte Wasseranteile auszutreiben, werden die Aerosolpartikel einer hohen Temperatur im Bereich von 150°C ausgesetzt. Hierbei hat sich eine Temperatur von ca. 300°C bei einer Verweilzeit von ca. 10 bis 20 Sekunden als besonders geeignet erwiesen. Im Rahmen der vorliegenden Erfindung wird diese Umwandlung der gelösten Ca(HCO₃)₂/Bicarbonat-Aerosolpartikel in feste CaCO₃/Carbonat-Aerosolpartikel bei hohen Temperaturen unter Austreibung von Wasser auch als "Tempern" bezeichnet. Dieses Tempern kann beispielsweise mittels eines Röhrenofens durchgeführt werden. Für das Tempern sind auch geringere Temperaturen von beispielsweise ca. ≥ 150°C geeignet, wobei die Verweilzeiten dann allerdings erhöht werden müssen, um zu einem vergleichbaren Ergebnis zu gelangen. Generell sind Temperaturen im Bereich von ca. 150°C bis zu 1500°C geeignet.

Die Ausgangslösung, enthaltend Metallsalze oder Übergangsmetallsalze, kann ebenfalls, wie schon zuvor beschrieben, versprüht, getrocknet und getempert werden. Durch das Tempern können die Metallsalz-/Übergangsmetallsalz-Aerosol-partikel dann in Metalloxid-/Übergangsmetalloxid-Aerosolpartikel überführt werden. Für das Tempern der Metallsalz-/Übergangsmetallsalz-Aerosolpartikel sollten vorzugsweise Temperaturen im Bereich von ca. 900°C oder höher eingestellt werden.

Die gebildeten Aerosolpartikel können durch die Anwendung von *Scanning Mobility Particle Sizer* (SMPS), *Aerosol Mass Spectrometry* (AMS) und der *Transmissions Elektronen Mikroskopie* (TEM), charakterisiert werden, um die Größenverteilung, typische Konzentrationen, chemische Zusammensetzung und Morphologie der gebildeten Aerosolpartikel aufzuklären.

Gleichzeitig können die frisch versprühten und getemperten Aerosolpartikel an Hand ihrer Hygroskopizität und CCN-Aktivität klassifiziert werden. Dabei kann ein *Hygroscopicity Tandem Differential Mobility Analyzer* (HTDMA) und ein *Cloud Condensation Nucleii Counter* (CCNC) verwendet werden. Hierbei kann man sich den deutlichen Unterschied in der Löslichkeit zwischen CaCO₃/Carbonaten und Ca(HCO₃)₂/Bicarbonaten zu Nutze machen.

Das erfindungsgemäße Verfahren ist einfach zu betreiben und ist in der Lage, Aerosolpartikel in ausreichender Konzentration (z. B. ca. 10.000 Partikel/cm³ mit einer Partikelgröße zwischen 120 und 130 nm) und geeigneter Größe (z. B. 120 bis 130 nm) beispielsweise für die Untersuchung physikochemischer Eigenschaften zu erzeugen. Dies wurde am Beispiel ihres hygroskopischen Verhaltens und der CCN-Aktivität sowie einiger heterogener Reaktionen der mineralischen Aerosolpartikel untersucht. Betrachtet man den hygroskopischen Wachstumsfaktor bei 90 % relativer Luftfeuchte, so sind Ca(HCO₃)₂-Aerosolpartikel deutlich hygroskopischer als CaCO₃-Aerosolpartikel. Der Wachstumsfaktor gibt das Verhältnis zwischen dem Partikeldurchmesser von trockenen Partikeln zum Partikeldurchmesser von feuchten Partikeln an und ist damit dimensionslos.

Die CCN-Aktivität von Ca(HCO₃)₂-Aerosolpartiklen ist signifikant höher als diejenige von CaCO₃-Aerosolpartikeln und nur unwesentlich geringer als die von (NH₄)₂SO₄-Aerosolpartiklen. Die erfindungsgemäßen Aerosolpartikel wiesen eine sphärische, kugelförmige Struktur auf.

Die Erfindung betrifft weiterhin die durch das erfindungsgemäße Verfahren hergestellten Aerosolpartikel sowie deren Verwendung.

Die durch das erfindungsgemäße Verfahren hergestellten Aerosolpartikel können beispielsweise für die Kalibrierung von Messgeräten für die Umweltanalytik, z. B. im Bereich der Wetteranalyse oder die Untersuchung des Verhaltens und den Einfluss von Aerosolpartikeln in der Atmosphäre und auf das globale Klima verwendet werden. Ein weiteres mögliches Einsatzgebiet kann die Nanotechnologie sein. Weiterhin können die Partikel auch für die Behandlung von Oberflächen, wie z. B. Lackierprozesse verwendet werden. Eine weitere Anwendung kann die Herstellung von Dispersionen zum Polieren von Oberflächen sein oder als Katalysator und als Katalysatorträger.

### Ausführungsbeispiele:

Im Folgenden wird das erfindungsgemäße Verfahren beispielhaft anhand von experimentellen Ausführungen näher beschrieben.

### 1. Herstellung einer Ca(HCO₃)₂-Lösung

Zur Herstellung einer Ca(HCO₃)₂-Lösung wird CO₂ bei einem Druck von 20 mbar und einer Temperatur von ca. 22°C aus einem Zylinder in ca. 1 Liter Wasser eingeleitet. Das Wasser enthält 2g CaCO₃ Puder. Während des Einleitens des CO₂ wird die Lösung mit einem Magnetrührer gerührt, um die Löslichkeit von CaCO₃ in Wasser zu erhöhen. Nach der Begasung mit CO₂ wurde die Lösung für ca. 5 min stehen gelassen, um das Absetzen des ungelösten CaCO₃ zu erreichen. Der sich bildende klare Überstand, enthaltend die Ca(HCO₃)₂-Lösung, wurde dekantiert und anschließend versprüht. Dazu wurde ein Aerosolgenerator (TSI, Model 3076) und synthetische Luft (z. B. Linde LiPur Qualität 6.0) verwendet.

Die dadurch erzeugten Aerosolpartikel wurden durch eine Diffusions-Trocknungssäule, gefüllt mit Silicagel, gegeben und anschließend einem Entspannungs-oder Ausdehnungsraum zugeführt, um den Aerosolpartikeln Gelegenheit zu geben, die elektrische Ladung auszugleichen. Die Größenverteilung der Aerosolpartikel wurde mittels SMPS (Scanning Mobility Particle Sizer) ermittelt.

### 2. Herstellung von_CaCO₃ Partikeln

Zur Herstellung von CaCO₃ Aerosolpartikeln aus Ca(HCO₃)₂ wurde ein Röhrenofen bei ca. 300°C eingesetzt. Diese Ofentemperatur hat sich als geeignet erwiesen, da bei dieser Temperatur Ca(HCO₃)₂ zu CaCO₃ (R2) zerfällt, während CaCO₃ stabil bleibt und nicht zerfällt.

Ca(HCO₃)₂ (s) → CaCO₃ (s) + CO₂ + H₂O (R2)

Die Aerosolpartikel wurden anschließend neutralisiert, um die durch die Behandlung entstandene elektrische Aufladung der Aerosolpartikel zu entfernen und eine weitere Untersuchung der Aerosolpartikel zu erleichtern. Je nach Bedarf kann eine Selektion der Aerosolpartikelgröße, z. B. für eine Partikelgröße von 100 bis 120 nm durchgeführt werden. Hierzu sind alle dem Fachmann nach dem Stand der Technik bekannten Geräte, wie z. B. ein Differentieller Mobilitätsanalysator (DMA), und Verfahren geeignet.

### 3. Charakterisierung der chemischen Zusammensetzung und Morphologie der Aerosolpartikel

Die Aerosolpartikel wurden zur Charakterisierung in einem Quadrupol-AMS auf ihren Wasser- und Kohlendioxid-Gehalt gemessen, der durch Zerfall im Vakuum und unter Hitzeeinwirkung anhand der ionisierten Massen der Moleküle H₂O und CO₂ die größenabhängige chemische Zusammensetzung ermittelte. Wasser mit einem Masse-zu-Ladung-Verhältnis von 18 und Kohlendioxid mit einem Masse-zu-Ladung-Verhältnis von 44 konnten zur Ermittlung des Gehalts an Carbonat und Bicarbonat herangezogen werden. Durch die Variation der Temperatur im Quadrupol-MS zwischen 300°C und 900°C konnte die Unterscheidung von Carbonat und Bicarbonat deutlich gemacht werden. Bei 300°C wurde nur das Bicarbonat zum CO₂ zersetzt, bei 900°C auch das Carbonat. Ca(HCO₃)₂ liefert zwei CO₂ und ein H₂O pro Molekül, CaCO₃ nur ein CO₂.

Ca(HCO₃)₂(s)→CaO(s)+2CO₂ +H₂O (R3)

CaCO₃(s)→CaO(s)+CO₂ (R4)

Die Partikel-Massenverteilung als Funktion des aerodynamischen Durchmessers im Vakuum konnte im *Time Of Flight Mode* des Quadrupol-MS ermittelt werden. Die effektive Partikeldichte wurde bestimmt über den Vergleich der Modenpositonen der Massenverteilung (AMS) und der Volumenverteilung. Die Volumenverteilung wurde aus der Verteilung der Partikelanzahl (SMPS) erhalten.

Für die Aufklärung der Morphologie der Partikel wurden CaCO₃ Aerosolpartikel auf einem für die Untersuchung mit der Transmissions Elektronenmikroskopie geeigneten Kupfernetz gesammelt.

### 4. HTDMA Untersuchungen

Das hygroskopische Wachstum der Partikel wurde in einem selbst entwickelten HTDMA (Buchholz, 2007) gemessen. Zwei DMA-Geräte hintereinander trafen eine Größenklassifizierung. Nach Befeuchten mit wassergesättigter Luft bei 27°C wurde die Wachstumskurve aufgenommen. Kalibriert wurde mit üblicherweise verwendetem Ammoniumsulfat-Aerosol.

### 5. Größenverteilung und Stabilität der Aerosol-Partikel Herstellung

Unterschiedliche Zeiten der Kohlendioxid Einleitung/Begasung in die CaCO₃ - Wasser Suspension wurden untersucht, um die CO₂ ― Menge bis zum Erreichen der Sättigung der wässrigen Lösung an Ca(HCO₃)₂ zu bestimmen. Die Anzahl der Aerosolpartikel stieg rasch mit der Dauer der CO₂ - Einleitung an. Nach 1 Stunde waren bereits ca. 80 % der endgültigen Konzentration messbar, die nach 2 Stunden ein Sättigungs-Maximum erreichte und nicht weiter messbar anstieg. Um auf der sicheren Seite zu sein wurde eine Einleitungszeit/Begasungszeit von 3 Stunden gewählt. Das Maximum der Teilchenanzahl lag bei Partikeln mit 120 nm Durchmesser, mit einer geometrischen Standardabweichung von 1,8.

Die Stabilität der Ca(HCO₃)₂ ― Lösung wurde getestet durch kontinuierliches Versprühen derselben Lösung und anschließendes Vermessen der Teilchenanzahl und der mittleren Partikelgröße. Die Teilchenanzahl nahm mit der Dauer des Versprühens ab und erreichte ein Minimum nach ca. 100 min. Währenddessen nahm der mittlere Durchmesser über 2 Stunden von 120 nm auf 80 nm ab.

Während der Standzeit der Ausgangslösung nimmt der Kohlendioxidgehalt in der Lösung ab, was zu einer verringerten Ca(HCO₃)₂ ― Aerosolkonzentration und damit zu der oben beschriebenen Abnahme der Teilchenanzahl und des mittleren Durchmessers führt.

### 6. Hygroskopizität der Aerosol Partikel

Zur weiteren Klassifizierung wurde die Wasseraufnahme der Aerosolpartikel herangezogen.

Frisch hergestellte Aerosolpartikel aus CaCO₃ nahmen erst bei einer relativen Luftfeuchte (= RH) von mehr als 97,4% sehr geringe Mengen Wasser auf. Ca(HCO₃)₂ -Partikel hingegen wuchsen kontinuierlich bis zu RH = 68,2%. Zwischen 68% und 77% sank der Wachstumsfaktor (= GF) drastisch ab und erreichte bei 89,5% ein Minimum. Danach wuchsen die Partikel kontinuierlich mit zunehmender Feuchte bis auf einen GF von 1,05 oberhalb 93% RH.

Der Konditionierungsprozess kann verstanden werden als die Lösung einer geringen Menge Bikarbonat in der dünnen äußeren Wasserschicht, wo es zerfällt und Kohlendioxid freisetzt. Dies ist der gleiche Prozess, der bei der Verwitterung von Karbonatgestein stattfindet.

Im Vergleich zu reinem Karbonat vergrößert die Anwesenheit von Bikarbonat die Wachstumsfaktoren und verschiebt die Wachstumskurve hin zu niedrigeren relativen Feuchten.

Reines Bikarbonat scheint oberhalb einer Feuchte von 68% RH instabil zu sein und kann deshalb trotz der sehr kurzen Messzeit des HTDMA-Messinstruments nicht auf sein Wachstumsverhalten untersucht werden. Es muss dennoch deutlich hygroskopischer sein als das Mischsalz, was sein Wachstumsfaktor bei ~70% RH deutlich macht.

**Tabelle 1: Eigenschaften von Aerosolpartikeln, die aus Carbonat oder Bicarbonat bestehen**

| Aerosolpartikel bestehend aus: | RH | GF trocken | GF feuchtkonditioniert | Wachstum |
|---|---|---|---|---|
| CaCO₃ | 97,4% | gering | 0 | gering |
| Ca(HCO₃)₂ | 68,2% | ~1 | >93% = 1,05 | groß |
| | 89,5% | Minimum | | |

## Patentansprüche

1. Verfahren zur Herstellung von Aerosolpartikeln,
umfassend folgende Schritte:
- Herstellung einer Ausgangslösung durch
a) Begasen einer wässrigen Lösung, enthaltend ein Carbonatsalz, das mindestens bis zu seinem Löslichkeitsprodukt in Wasser gelöst vorliegt, mit CO₂;
b) Abtrennen der entstandenen bicarbonathaltigen Lösung (= Ausgangslösung) vom festen Carbonatsalz;
- Versprühen dieser Ausgangslösung;
- Trocknen des dadurch erhaltenen Gemisches aus Aerosolpartikeln, Gas und Wasser;
- Tempern der Aerosolpartikel bei Temperaturen ≥ 150°C zur Umwandlung der bicarbonathaltigen Aerosolpartikel in carbonathaltige Aerosolpartikel.

2. Verfahren nach Anspruch 1,
**dadurch gekennzeichnet,**
**dass** in a) Metallcarbonate oder Übergangsmetallcarbonate für die wässrige Lösung eingesetzt werden.

3. Verfahren nach Anspruch 1,
**dadurch gekennzeichnet,**
**dass** unter a) CaCO₃, MgCO₃, Na₂CO₃,K₂CO₃, FeCO₃, MnCO₃ oder ZnCO₃ für die wässrige Lösung eingesetzt wird.

4. Verfahren nach Anspruch 1,
**dadurch gekennzeichnet,**
**dass** zur Herstellung einer Ausgangslösung an Stelle der Carbonatsalze gemäß a) Metallsalze oder Übergangsmetallsalze für die wässrige Lösung eingesetzt werden, und an Stelle der Begasung mit CO₂ eine Ansäuerung der wässrigen Lösung mit einer Mineralsäure oder einer Carbonsäure durchgeführt wird.

5. Verfahren nach Anspruch 4,
**dadurch gekennzeichnet,**
**dass** durch die Ansäuerung die Metallsalze oder Übergangsmetallsalze vollständig in die lösliche Form überführt werden und keine Abtrennung gemäß b) durchgeführt wird.

6. Verfahren nach Anspruch 4,
**dadurch gekennzeichnet,**
**dass** durch die Ansäuerung die Metallsalze oder Übergangsmetallsalze nicht vollständig in die lösliche Form überführt werden und eine Abtrennung gemäß b) durchgeführt wird.

7. Verfahren nach einem der Ansprüche 4 bis 6,
**dadurch gekennzeichnet,**
**dass** das Tempern bei einer Temperatur ≥ 900°C durchgeführt wird, um die Metallsalzaerosolpartikel oder Übergangsmetallsalzaerosolpartikel in Metalloxidaerosolpartikel oder Übergangsmetalloxidaerosolpartikel umzuwandeln.

8. Verfahren nach einem der Ansprüche 1 bis 7,
**dadurch gekennzeichnet,**
**dass** eine Düse oder Zerstäuberdüse für das Versprühen eingesetzt wird.

9. Aerosolpartikel hergestellt durch ein Verfahren nach Anspruch 1 bis 8.

10. Aerosolpartikel nach Anspruch 9, enthaltend Carbonat bzw. Metalloxid/Übergangsmetalloxid.

11. Verwendung der Partikel nach Anspruch 9 bis 10 zur Kalibrierung von Messgeräten für die Umweltanalytik.

12. Verwendung der Partikel nach Anspruch 9 bis 10 zur Behandlung von Oberflächen.
